# EUROPEAN PATENT SPECIFICATION

(11) **EP 2 911 088 B1**
(45) Date of publication and mention of the grant of the patent: **10.10.2018**
(21) Application number: 15155982.0
(22) Date of filing: 20.02.2015
(51) Int. Cl.: G06F 21/62, G06F 21/84, G06T 1/00, G06T 11/00, G06T 11/60, G06K 9/00

(54) **Method and apparatus for displaying biometric information**
Verfahren und Vorrichtung zum Anzeigen biometrischer Informationen
Procédé et appareil permettant de traiter des informations biométriques

(30) Priority: 21.02.2014 KR 20140020512
(43) Date of publication of application: 26.08.2015
(73) Proprietor: Samsung Electronics Co., Ltd., Gyeonggi-do 443-742 (KR)
(72) Inventor: Yoon, Young-Kwon, Gyeonggi-do, (KR); Sung, Woon-Tahk, Gyeonggi-do (KR); Kim, Moon-Soo, Gyeonggi-do (KR); Jeong, Taek-Seong, Gyeonggi-do (KR); Kim, Tae-Ho, Gyeonggi-do (KR); Lee, Ki-Huk, Gyeonggi-do (KR); Chang, Moon-Soo, Gyeonggi-do, 443-742 (KR); Lee, Yang-Soo, Gyeonggi-do, 443-742 (KR)
(74) Representative: Appleyard Lees IP LLP

(56) References cited:
- EP-A1- 2 570 969
- US-A1- 2004 148 298
- US-A1- 2006 120 707
- US-A1- 2008 002 911
- US-A1- 2010 259 560

## Description

### TECHNICAL FIELD

The present disclosure relates to a method and an apparatus for displaying a biometric information image related to biometric information recognition.

### BACKGROUND

Recently, portable electronic devices include various functions, such as a Motion Picture Expert Group (MPEG) Audio Layer 3 (MP3) play function, a game function, and a camera function, and may perform even a vehicle key function and a wallet function for purchase of products and Internet banking. Accordingly, security has become needed during use of portable electronic devices and demand for personal authentication methods has increased.

Methods of recognizing and authenticating users of portable electronic devices from human biological features include various biometric measurement methods, such as fingerprint recognition, voice recognition, iris recognition, face recognition, and vein recognition. Among them, the iris recognition method is a method of recognizing each user's unique iris pattern and identifying the person. Unique iris patterns may be formed within one or two years after the birth and do not change during a person's lifetime, and the iris recognition method may identify a person within two seconds through a process of changing variations of the iris, i.e., a pattern of the iris, into a frequency. The iris of a living person has minute variations, so that it is almost impossible to pirate, or in other words, copy and/or replicate, the variation of the iris. Further, an auto-focus camera may recognize the pattern of the iris in a state of being spaced apart from the iris by 8 to 25 cm.

The iris recognition method may adopt a method of storing an iris image with high resolution and identifying a person. In order to store the iris image, a camera technology may be used, and infrared rays may be additionally or alternately used in order to obtain the iris image. When the iris image is obtained, an iris recognition system may convert a pattern of the iris and then enable a device to recognize the iris.

The above information is presented as background information only to assist with an understanding of the present disclosure. No determination has been made, and no assertion is made, as to whether any of the above might be applicable as prior art with regard to the present disclosure.

Document US2010/0259560 A1 discloses displaying an image effect over sensitive information. Document US 2008/0002911 A1 discloses displaying an image effect over biometric information.

### SUMMARY

According to the present invention there is provided an apparatus and method as set forth in the appended claims. Other features of the invention will be apparent from the dependent claims, and the description which follows.

The iris recognition system according to the present technology does not separately display an iris image of a user, or output the iris image without change when displaying the iris image of the user. When the iris recognition system does not display the iris image, there is a problem in that it is difficult for a user to properly locate his/her iris at an appropriate position for an iris recognition camera which has a narrow view angle. Further, when the iris recognition system displays the iris image, there is a risk in that personal iris information may be exposed through the display photographing the iris using screen capture or another external device.

Aspects of the present disclosure are to address at least the above-mentioned problems and/or disadvantages and to provide at least the advantages described below. Accordingly, an aspect of the present disclosure is to provide a method and an apparatus for allowing a user to conveniently use an iris recognition system.

Another aspect of the present disclosure is to provide a method and an apparatus, which are capable of preventing personal iris information from being leaked and/or accessible through a display photographing the iris using screen capture or another external device during provision of an iris image.

In accordance with an aspect of the present disclosure, a method of displaying biometric information is provided. The method includes at least obtaining a first image including at least a part of an image including biometric information, such as an iris (i.e. at least part of an image of an iris), applying an image effect to an image region corresponding to the at least a part of the biometric information, such as a part of the iris (i.e. part of the image of the iris), and displaying the image region through a display connected to the electronic apparatus.

The term biometric information as used herein means human biological features which may be captured as a characterizing, such as a fingerprint, an iris, a face, a vein or the like. An iris is a preferred biometric information.

The applying of the image effect may include overlaying at least a second image to the image region.

The applying of the image effect may include replacing the image region with an image corresponding to a form of the image region.

The displaying of the image region may include displaying only at least a part of the first image including at least the image region.

The displaying of the image region may include applying at least one image effect to a designated region of a border of the first image, and displaying the image region.

The displaying of the image region may include displaying information indicating a designated position corresponding to a position of the image region.

The applying of the image effect may include inserting a watermark to at least a part of the first image. The method may further comprise attempting iris recognition by using the first image; detecting the watermark from the first image; and transmitting a message notifying at least one external electronic devices of use of the first image based on the detected watermark.

In accordance with another aspect of the present disclosure, an electronic apparatus is provided. The electronic apparatus includes a display is further configured to display information and a control module connected to the display and configured to at least obtain an image
including at least a part of biometric information, such as an image including at least part of an image of an iris as biometric information, to apply an image effect to an image region corresponding to at least a part of the image of the biometric information, for instance the image of at least part of an iris, and to control the display to display the image region, wherein the display is connected to the electronic apparatus.

The apparatus may further comprise: an infrared emitting diode configured to emit infrared rays; and an image sensor configured to obtain the image, the image sensor being functionally connected to the infrared emitting diode.

The control module may be further configured to apply at least one image effect processing from among blur processing, mosaic processing, and color and brightness change to the image region.

The control module may be further configured to overlay at least one other image (i.e. a second image) to the image region, and to display the image region.

The control module may be further configured to replace the image region with a replacement image corresponding to a form of the image region, and to display the image region.

The control module may be further configured to display only at least a part of the image including at least the image region.

The control module may be further configured to apply at least one image effect to a designated region of a border of the image, and to display the image region.

The control module may be further configured to display information including a position of the image region corresponding to a designated position.

Other aspects, advantages, and salient features of the disclosure will become apparent to those skilled in the art from the following detailed description, which, taken in conjunction with the annexed drawings, discloses various examples of the present disclosure.

The invention is defined only by the scope of the appended claims.

### J BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram illustrating a network environment including an electronic apparatus according to an embodiment of the present disclosure;
FIG. 2 is a diagram illustrating a configuration of a camera module according to an embodiment of the present disclosure;
FIG. 3A is a diagram illustrating a characteristic of a band pass filter according to an embodiment of the present disclosure;
FIG. 3B is a diagram illustrating a wavelength characteristic of an Infrared Emitting Diode (IRED) according to an embodiment of the present disclosure;
FIG. 4 is a diagram illustrating a configuration of an iris detection module according to an embodiment of the present disclosure;
FIGS. 5, 6, 7, 8, and 9 are diagrams illustrating an operation process of the electronic apparatus according to various embodiments of the present disclosure;
FIGS. 10A, 10B, 10C, and 10D are diagrams illustrating an iris image including guide information according to an embodiment of the present disclosure;
FIGS. 11A, 11B, 11C, 12A, 12B, and 13 are diagrams illustrating an iris image, to which an image effect is applied, according to an embodiment of the present disclosure;
FIG. 14 is a diagram illustrating a process of protecting an iris image according to an embodiment of the present disclosure; and
FIG. 15 is a diagram illustrating a configuration of an electronic device according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, the expression "include" or "may include" refers to existence of a corresponding function, operation, or element, and does not limit one or more additional functions, operations, or elements. In the present disclosure, the terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In the present disclosure, the expression "or" includes any or all combinations of words enumerated together. For example, the expression "A or B" may include A, may include B, or may include both A and B.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose to distinguish an element from the other elements. For example, a first user device and a second user device indicate different user devices although both of them are user devices. For example, a first element could be termed a second element, and similarly, a second element could be also termed a first element without departing from the scope of the present disclosure.

In the case where a component is referred to as being "connected" or "accessed" to other component, it should be understood that not only the component is directly connected or accessed to the other component, but also there may exist another component between them. Meanwhile, in the case where a component is referred to as being "directly connected" or "directly accessed" to other component, it should be understood that there is no component therebetween.

The terms used in the present disclosure are only used to describe examples and are not intended to limit the present disclosure. Singular forms are intended to include plural forms unless the context clearly indicates otherwise.

Unless defined otherwise, all terms used herein, including technical and scientific terms, have the same meaning as commonly understood by those of skill in the art to which the present disclosure pertains. Such terms as those defined in a generally used dictionary are to be interpreted to have the meanings equal to the contextual meanings in the relevant field of art, and are not to be interpreted to have ideal or excessively formal meanings unless clearly defined in the present disclosure.

An electronic apparatus according to the present disclosure may be a device including an iris detection function. For example, the electronic apparatus may include at least one of a smart phone, a tablet Personal Computer (PC), a mobile phone, a video phone, an e-book reader, a desktop PC, a laptop PC, a netbook computer, a Personal Digital Assistant (PDA), a Portable Multimedia Player (PMP), an MP3 player, a mobile medical device, a camera, and a wearable device (for example, a Head Mounted Device (HMD), such as electronic eyeglasses, electronic clothes, an electronic bracelet, an electronic acccessory, an electronic tattoo, or a smart watch).

According to some embodiments, the electronic apparatus may be a smart home appliance with an iris detection control function. The smart home appliance, for example, the electronic apparatus, may include at least one of a television, a digital video disk player, an audio player, a refrigerator, an air conditioner, a vacuum, an oven, a microwave oven, a washing machine, an air cleaner, a set-top box, a Television (TV) box, for example, Samsung HomeSync, the Apple TV, or the Google Box, a game console, an electronic dictionary, an electronic key, a camcorder, and an electronic picture frame.

According to some embodiments, the electronic apparatus may include at least one of various medical devices, for example, Magnetic Resonance Angiography (MRA), Magnetic Resonance Imaging (MRI), Computed Tomography (CT), an imaging device, and an ultrasonic wave device, a navigation device, a Global Positioning System (GPS) receiver, an Event Data Recorder (EDR), a Flight Data Recorder (FDR), a vehicle infotainment device, electronic equipment for a ship, for example, a navigation system for a ship and a gyro compass, avionics, a security device, and a robot for industry or home, which include an iris detection function.

According to some embodiments, the electronic apparatus may include at least one of a part of furniture or buildings/structures, an electronic board, an electronic signature receiving device, a projector, or various measuring devices, for example, a water supply measuring device, an electricity measuring device, a gas measuring device, or a radio wave measuring device, which include an iris detection function. The electronic apparatus according to the present disclosure may be a combination of one or more of the aforementioned various devices. Further, it is obvious to those skilled in the art that the electronic apparatus according to the present disclosure is not limited to the aforementioned devices.

Hereinafter, an electronic apparatus according to various embodiments will be described with reference to the accompanying drawings. A term "user" used in various embodiments may refer a person using an electronic apparatus or a device using an electronic apparatus, for example, an artificial intelligent electronic apparatus.

According to embodiments described below, an example will be described in which iris information is protected when an image including the iris information is displayed, but the embodiments described below may be similarly applied even in cases where an image including other types of biometric information, other than iris information, is displayed. For example, when an image including fingerprint information or an image including vein map information is displayed on a display or is used for a recognition procedure, the fingerprint information and/or the vein map information may be protected by a similar process to that of the embodiments below.

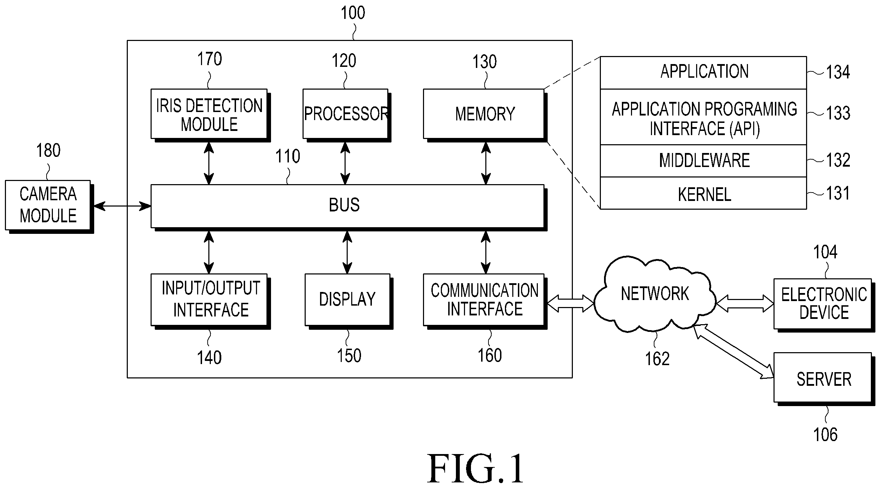

FIG. 1 illustrates a network environment including an electronic apparatus according to an embodiment of the present disclosure.

Referring to FIG. 1, an electronic apparatus 100 may include a bus 110, a processor 120, a memory 130, an input/output interface 140, a display 150, a communication interface 160, an iris detection module 170, and a camera module 180.

The bus 110 may be a circuit capable of connecting the aforementioned elements with each other, and transmitting communication, for example, a control message, between the aforementioned elements.

The processor 120 may, for example, receive commands through other elements, for example, the memory 130, the input/output interface 140, the display 150, and the communication interface 160, and the iris detection module 170, through the bus 110, decode the received command, and perform calculation and/or data processing according to the decoded command.

The memory 130 may store the command or data received from the processor 120 or other elements, for example, the input/output interface 140, the display 150, and the communication interface 160, the iris detection module 170, and the camera module 180, or generated by the processor 120 or other elements. The memory 130 may include programming modules, for example, a kernel 131, a middleware 132, an Application Programming Interface (API) 133, and an application 134. Each of the programming modules described above may be configured by software, firmware, hardware, or a combination of two or more thereof.

The kernel 131 may control or manage system resources, for example, the bus 110, the processor 120, and the memory 130, used for executing an operation or a function implemented in the remaining other programming modules, for example, the middleware 132, the API 133, and the application 134. Further, the kernel 131 may provide an interface, through which the middleware 132, the API 133, or the application 134 may access a separate element of the electronic apparatus 100 and control or manage the separate element of the electronic apparatus 100.

The middleware 132 may perform a relay operation so that the API 133 or the application 134 may communicate and transceive data with the kernel 131. Further, in relation to operation requests received from the application 134, the middleware 132 may perform a control, for example, scheduling or load balancing, on the operation request by using, for example, a method of assigning a priority in use of the system resource, for example, the bus 110, the processor 120, or the memory 130, of the electronic apparatus 100 to at least one application among the applications 134.

The API 133 is an interface, through which the application 134 controls a function provided by the kernel 131 or the middleware 132, and may include, for example, at least one interface or function, for example, a command, for controlling a file, controlling a window, processing an image, controlling a character, or the like.

According to various embodiments, the application 134 may include an iris recognition application, an SMS/MMS application, an email application, a calendar application, an alarm application, a health care application, for example, an application for measuring the amount of exercise or blood sugar, or an environment information application, for example, an application for providing air pressure, humidity, or temperature information. In addition or in general, the application 134 may be an application related to information exchange between the electronic apparatus 100 and an external electronic device, for example, an electronic device 104 and/or a server 106, which are respectively connected to the electronic apparatus 100 via a network 162. The application related to the information exchange may include, for example, a notification relay application for relaying specific information to the external electronic device or a device management application for managing the external electronic device.

For example, the notification relay application may include a function of relaying notification information generated in another application, for example, the SMS/MMS application, the email application, the health care application, or the environment information application, of the electronic apparatus 100 to the external electronic device, for example, the electronic device 104. In addition or in general, the notification relay application may, for example, receive notification information from the external electronic device, for example, the electronic device 104, and provide the user with the received notification information. The device management application may, for example, turn on/off a function of at least a part of external electronic devices, for example, the electronic device 104, communicating with the electronic apparatus 100, adjust the brightness or resolution of a display, and manage, for example, install, delete, or update, an application operated in the external electronic device or a service, for example, a call service or a message service, provided by the external electronic device.

According to various embodiments, the application 134 may include an application designated according to an attribute of the external electronic device 104, for example, the type of electronic device. For example, in the case where the external electronic device is an MP3 player, the application 134 may include an application related to play of a music file. Similarly, in the case where the external electronic device is a mobile medical device, the application 134 may include an application related to health care. According to an embodiment, the application 134 may include at least one of the applications designated in the electronic apparatus 100 or the application received from the external electronic device, for example, the server 106 or the electronic device 104.

The memory 130 may store an image obtained during an iris recognition process according to an embodiment. The memory 130 may store iris information registered by the user for the iris recognition according to an embodiment. Further, the memory 130 may store various indicators used for providing guide information for guiding the user so that the iris may be positioned at an appropriate point of the image used in the iris recognition. Further, the memory 130 may store information related to various image effects applicable to an iris region detected from the image.

The input/output interface 140 may transmit a command or data input from the user through an input/output device, for example, a sensor, a keyboard, or a touch screen, to the processor 120, the memory 130, the communication interface 160 or the iris detection module 170 through, for example, the bus 110. For example, the input/output interface 140 may provide the processor 120 with data for a touch of the user input through the touch screen. Further, the input/output interface 140 may, for example, output the command or the data, which is received from the processor 120, the memory 130, the communication interface 160, or the iris detection module 170 through the bus 110, through the input/output device, for example, a speaker or the display 150. For example, the input /output interface 140 may output audio data processed through the processor 120 to the user through the speaker.

The display 150 may display various types of information, for example, multimedia data or text data, or an image.

The communication interface 160 may establish communication between the electronic apparatus 100 and an external device, for example, the electronic device 104 or the server 106. For example, the communication interface 160 may be connected to the network 162 through wireless communication or wired communication and communicate with an external device. The wireless communication may include at least one of Wireless Fidelity (WiFi), BlueTooth (BT), Near Field Communication (NFC), Global Positioning System (GPS), and cellular communication, for example, Long Term Evolution (LTE), LTE-Advanced (LTE-A), Code Division Multiple Access (CDMA), Wideband CDMA (WCDMA), Universal Mobile Telephone Service (UMTS), WiBro, or Global System/Standard for Mobile Communication (GSM). The wired communication may include at least one of, for example, a Universal Serial Bus (USB), a High Definition Multimedia Interface (HDMI), Recommended Standard 232 (RS-232), and a Plain Old Telephone Service (POTS).

According to an embodiment, the network 162 may be a telecommunication network. The telecommunication network may include at least one of a computer network, the Internet, the Internet of things, and a telephone network. According to an embodiment, a protocol, (for example, a transport layer protocol, data link layer protocol, or a physical layer protocol, for communication between the electronic apparatus 100 and an external device may be supported by at least one of the application 134, the application programming interface 133, the middleware 132, the kernel 131, and the communication interface 160.

The iris detection module 170, which may also be referred to as a control module 170, may process at least some of the information obtained from other elements, for example, the processor 120, the memory 130, the input/output interface 140, the communication interface 160, and the camera module 180, and provide the user with the obtained information through various methods. For example, the iris detection module 170 may process the iris image obtained for the iris recognition by using the processor 120 or independently from the processor 120, and make the iris image to be displayed on the display 150. That is, the iris detection module 170 may set the iris recognition mode, generate a photographed image of a photographed object, that is, a face of the user, by controlling the camera module 180, and detect an image region including at least a part of the iris, that is, an iris region, from the generated image. The iris detection module 170 may determine guide information corresponding to the detected iris region, and provide the user with the determined guide information. The guide information is information guiding an appropriate position of the iris in the image used for the iris recognition to the user. Further, the iris detection module 170 may generate an image, to which an image effect is applied, by applying an appropriate image effect to the detected iris region, and display the generated image on the display 150. The image effect may be image processing of distorting data of the iris region in order to prevent iris information from being exposed. For example, the image effect may include blur processing, mosaic processing, color and brightness change, and the like. Otherwise, the image effect may also be overlaying a separate image on the detected iris region. In other cases, the image effect may also be an image processing enabling only a form of the detected iris region to be identified. According to an embodiment, the electronic apparatus 100 may additionally include a biometric information detection module, or include a biometric information detection module in replacement of the iris detection module 170. The iris detection module 170 may be implemented by a software module or a hardware module. If the iris detection module 170 is implemented by a software module, the iris detection module 170 may be included in the processor 120.

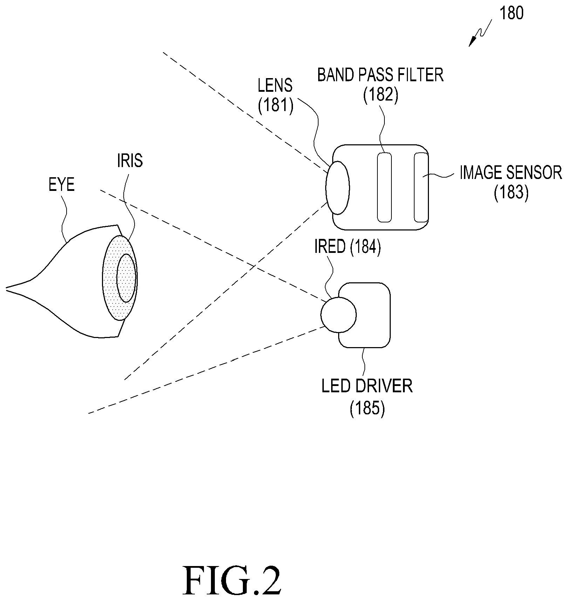

FIG. 2 is a diagram illustrating a configuration of a camera module of the electronic apparatus according to an embodiment of the present disclosure.

Referring to FIG. 2, according to an embodiment, a camera module 180 may include an image sensor 183, a band pass filter 182, a lens 181, an Infrared Emitting Diode (IRED) 184, a Light Emitting Diode (LED) driver 185.

The IRED 184 may emit light of a specific wavelength band under the control of the LED driver 185. Further, according to an embodiment, the IRED 184, which is capable of emitting light as continuous waves, may be used, and the IRED 184, which is capable of being synchronized to an input frame of the image sensor 183 to emit light with a pulse, may be used. For example, the LED driver 185 may drive the IRED 184 under the control of the iris detection module 170.

The lens 181 receives light for inputting the iris of the user, and the light incident to the lens 181 reaches the band pass filter 182.

The band pass filter 182 is disposed at a rear end of the lens 181 to allow a wavelength of a specific band in the incident light to pass through. The band pass filter 182 may correspond to a wavelength band including at least a part of a wavelength band emitted through the IRED 184. For example, an optical signal having the wavelength of the specific band, which passes through the band pass filter 182, reaches the image sensor 183.

The image sensor 183 may change the optical signal, which passes through the band pass filter 182, and output the change digital signal to the iris detection module 170 through the bus 110.

Referring to FIG. 2, infrared rays having a wavelength of a specific band are emitted through the IRED 184, and the lens 183 may receive light reflected from the eye and/or iris of the eye. In this case, the band pass filter 182 having the wavelength band including at least a part of the wavelength band emitted through the IRED 184, may be disposed at a rear end of the lens 182. Accordingly, the optical signal having the specific wavelength band may be converted into the digital signal by the image sensor 183. Further, the converted digital signal is processed by the iris detection module 170, so that the iris image may be generated. Accordingly, the camera module including the lens 181, the band pass filter 182, and the image sensor 183, and the IRED 184 may be mounted at positions of an exterior side of the electronic apparatus 100, which are adjacent to each other, or spaced apart from each other by a minimum short distance.

The camera module 180 according to another embodiment may include the lens 181 and the image sensor 183. In this case, the image sensor 183 may be the image sensor having high resolution of a specific level or higher. Otherwise, according to an embodiment, the IRED 184 may include an emission body capable of emitting light of a designated wavelength and/or frequency band.

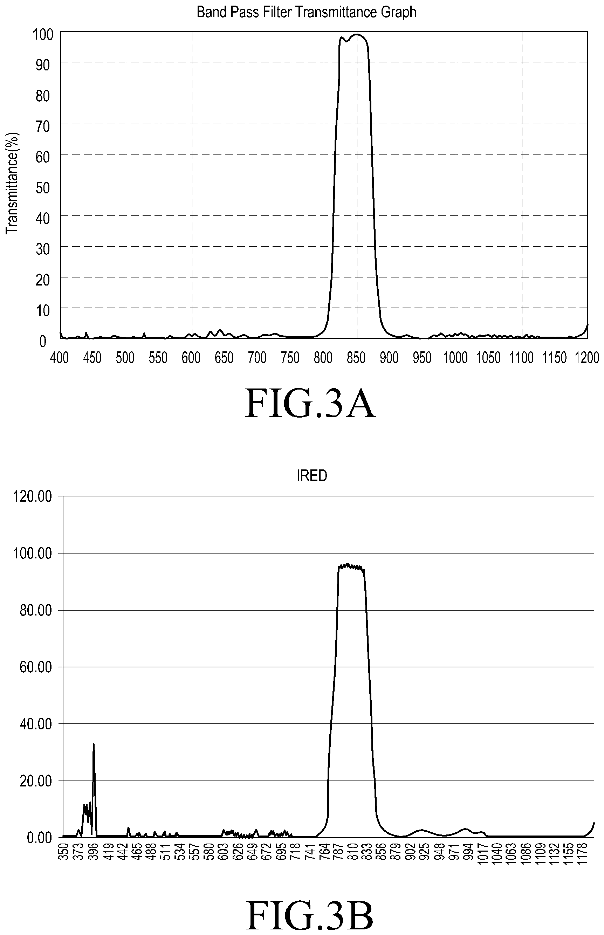

FIG. 3A is a diagram illustrating a characteristic of a band pass filter according to an embodiment of the present disclosure; and FIG. 3B is a diagram illustrating a wavelength characteristic of an IRED according to an embodiment of the present disclosure.

Referring to FIGS. 3A and 3B, an example of a frequency characteristic of the band pass filter 182, which may be included in the electronic apparatus 100, is illustrated in FIG. 3A, and an example of a frequency characteristic of the IRED 184 is illustrated in FIG. 3B. For example, in the case where the IRED 184 emits light with the wavelength band of 850 nm to 50 nm, the band pass filter 182 may selectively receive light of the wavelength band emitted by the IRED 184 by using a filter which allows the wavelength band of 850 nm to 50 nm including a center wavelength band of the IRED 184 to pass through. By applying such a configuration, it is possible to prevent an erroneous operation due to light of another neighboring infrared ray wavelength band.

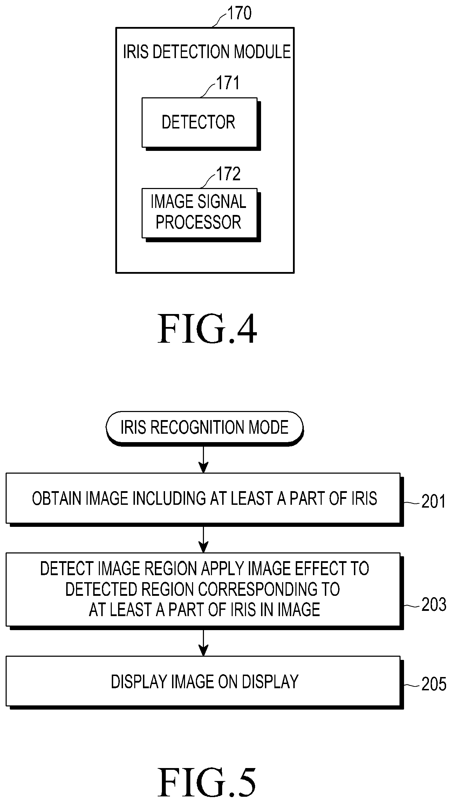

FIG. 4 is a diagram illustrating a configuration of an iris detection module of the electronic apparatus according to an embodiment of the present disclosure.

Referring to FIG. 4, the iris detection module 170 may include a detector 171 and an image signal processor 172.

The image signal processor 172 may generate an image by processing the digital signal transmitted from the image sensor 183 under the control of the detector 171, and output the generated image to the detector 171.

When an iris recognition mode is set according to an embodiment, the detector 171 may drive the image sensor 183, the image processor 172, and the LED driver 185. Further, the detector 171 may detect an image region, that is, an iris region, including at least a part of the iris from the image input from the image processor 172. That is, the detector 171 may detect the eye from the image, estimate a position of the iris, and detect the iris region including at least a part of the iris. When the iris region is detected from the image, the detector 171 may determine guide information corresponding to the detected iris region, and provide the user with the determined guide information. Otherwise, the detector 171 may generate an image, to which an image effect is applied, by applying an appropriate image effect to the detected iris region, and may display the generated image on the display 150. Otherwise, the detector 171 may also display the image, to which the image effect is applied, on the display 150 together with the guide information.

Referring to FIG. 4, it is described that the detector 171 and the image signal processor 172 are separate elements, but may be implemented by a software module, a hardware module, or a combination thereof.

The iris detection module 170 in another embodiment may include a separate hardware, software, or firmware module, or a combination thereof.

Operations according to various embodiments of the iris detection module 170 will be described with reference to FIGS. 5 to 13.

According to various embodiments, the electronic apparatus 100 may include the display 150 for indicating information, and a control module, for example, the iris detection module 170, functionally connected with the display 150. The control module may obtain an image including at least a part of biometric information, apply an image effect to an image region corresponding to at least the part of the biometric information, and set the image to be displayed through the display 150 functionally connected with the electronic apparatus 100.

According to various embodiments, the electronic apparatus 100 may further include the IRED 184, and an image sensor functionally connected with the IRED 184 to obtain the image. According to various embodiments, the control module may set at least one image effect processing among blur processing, mosaic processing, and color and brightness change to be applied to the image region.

According to various embodiments, the control module may set at least one other image to be overlaid on the image region to be displayed.

According to various embodiments, the control module may set the image region to be replaced with an image corresponding to a form of the image region, and the replaced image to be displayed.

According to various embodiments, the control module may set only at least a part of the image including the image region to be displayed.

According to various embodiments, the control module may set at least one image effect to be applied to a designated region of a border of the image, and the designated region, to which the image effect is applied, to be displayed.

According to various embodiments, the control module may set information inducing a position of the image region to a designated position to be displayed.

According to various embodiments, the control module may set a watermark to be inserted into at least a part of the image.

According to various embodiments, the control module may set a watermark including at least one of user identification information, device information, a telephone number, time information, server information, and position information to be inserted into at least a part of the image.

According to various embodiments, the control module may set the iris recognition using the image to be attempted, the watermark to be detected from the image, and a message notifying use of the image to be transmitted to at least one external electronic device based on the detected watermark.

According to various embodiments, the electronic apparatus 100 may include the IRED 184 for emitting light of infrared rays, the image sensor 183 for obtaining an image including at least a part of the iris of the user reflected by the emitted infrared rays, and the display 150 for displaying at least a part of the obtained image, and the IRED 184, the image sensor 183, and the display 150 may be positioned on one surface of the electronic apparatus 100.

According to various embodiments, the electronic apparatus 100 may include the band pass filter 182 for allowing a wavelength and/or a frequency band, including at least a part of the wavelength emitted by the IRED 184.

According to various embodiments, the electronic apparatus 100 may include the IRED 184 for emitting infrared rays having a predetermined wavelength.

FIGS. 5, 6, 7, 8, and 9 are diagrams illustrating an operation process of the electronic apparatus according to various embodiments of the present disclosure.

Referring to FIG. 5, a diagram illustrating an operation process of displaying an image including the biometric information by the iris detection module 170 is shown.

The iris detection module 170 may obtain an image including at least a part of the iris through the camera module 180 in operation 201.

The iris detection module 170 may detect an image region corresponding to at least a part of the image from the obtained image, and apply an image effect to the detected image region in operation 203.

Further, the iris detection module 170 may display an image obtained by applying the image effect to the image region on the display 150 in operation 205.

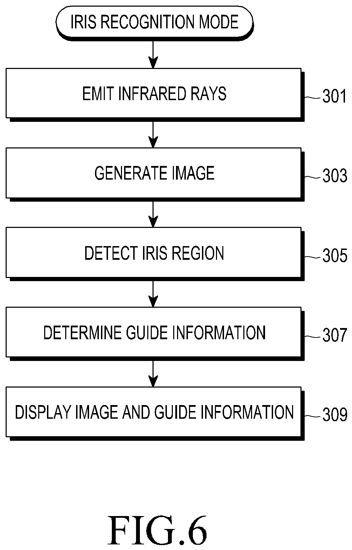

Referring to FIG. 6, a diagram illustrating an operation process of the iris detection module 170 when the guide information is provided according to an embodiment of the present disclosure, is shown. The user may request setting of the iris recognition mode from the electronic apparatus 100. Accordingly, the iris detection module 170 may set the iris recognition mode in the electronic apparatus 100. When the iris recognition mode is set, the iris detection module 170 may make infrared rays of a specific wavelength be emitted through the IRED 184 by controlling the LED driver 185 in operation 301. Further, the iris detection module 170 may drive the image sensor 183 and process data output from the image sensor 183 in order to generate an image in operation 303. In this case, the iris detection module 170 may also make a message notifying that recognition preparation is completed.

The user may position the electronic apparatus 100 at a position spaced apart from the face by an appropriate interval so that the lens 181 of the electronic apparatus 100 may be positioned at a point at which the eye may be photographed.

The iris detection module 170 of the electronic apparatus 100 may control the image signal processor 172 to process the digital signal output by the image sensor 183 from a time, at which the iris recognition mode is set, and provide the user with a preview. For example, the image signal processor 172 may convert a raw image signal output through the image sensor 183 into a YUV data, and display the converted YUV data on the display 150 in the form of a preview.

Further, the iris detection module 170 may detect an iris region from the generated image in operation 305. The iris detection module 170 may estimate a position of the iris by detecting an eye from the image, and detect the iris region including at least a part of the iris. When the iris region is detected, the iris detection module 170 may confirm a position, a size, and the like of the iris region detected from the corresponding image, and determine guide information corresponding to the detected iris region in operation 307. The guide information may be information guiding the position of the iris region to a designated position. The guide information may be information indicating the designated position corresponding to the position of the iris region. Further, the iris detection module 170 may display the image and the guide information on the display 150 in operation 309.

In this case, since the user watches the display 150 in order to adjust the position of the eye, the preview may be formed at a position close to the iris recognition camera module 180 in order to minimize an angle between an optical axis of the iris recognition camera module 180 and a view direction of the user. Accordingly, the user may recognize whether his/her iris image is positioned within a view angle of the camera module 180 for the iris recognition.

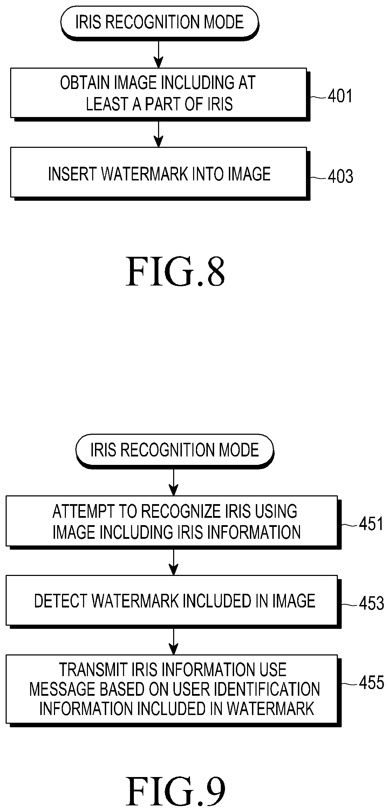

According to an embodiment of the present disclosure, when the user does not position the iris at an appropriate position, the iris detection module 170 may display guide information notifying that the iris is not positioned at the appropriate position on the display 150. Examples related to this are illustrated in FIGS. 9A to 9D.

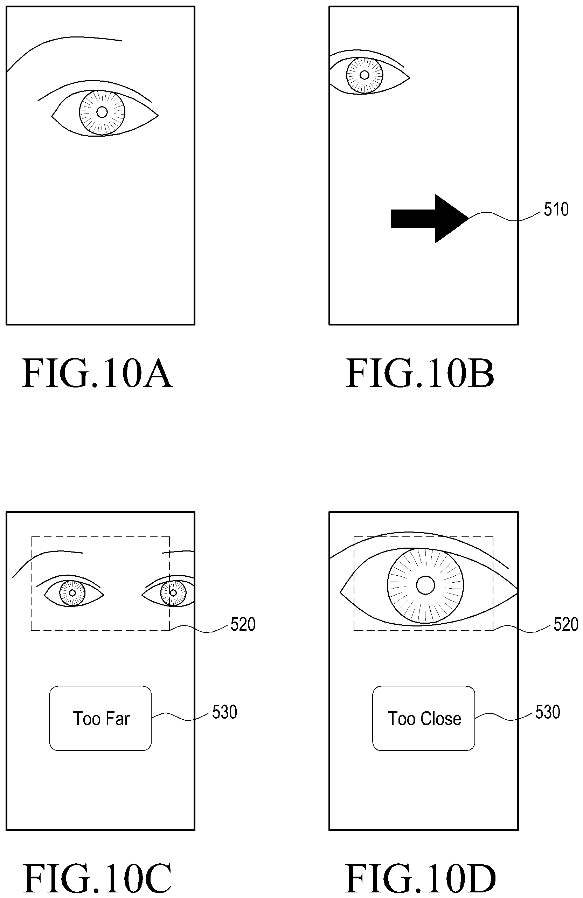

FIGS. 10A, 10B, 10C, and 10D are diagrams illustrating an iris image including guide information according to an embodiment of the present disclosure.

Referring to FIG. 10A, a diagram illustrating that the eye, that is, the iris, of the user is positioned at a reference point on the image is illustrated, and Referring to FIGS. 10B to 10D, diagrams illustrating that the iris is incorrectly positioned so that the guide information is displayed together is illustrated.

FIG. 10B illustrates a case where the position of the iris is positioned excessively to the left, and in this case, a right-directional arrow 510 indicating the guide information directing a movement to the right may be displayed on the display 150.

Further, a message 530 may also be displayed according to a size and/or a position of the eye of the user, as shown in FIG. 10C. For example, when the eye of the user is determined to be small so as to not properly occupy an area 520, the message 530, such as "too far", may be displayed as illustrated in FIG. 10C, or the message 530 such as "decrease distance" may also be displayed. When the eye of the user is recognized to be large so as to not properly occupy the area 520, or it is determined that the eye is too close through intensity of reflected light of the infrared rays or a proximity sensor, the message 530, such as "too close", may be displayed as illustrated in FIG. 10D.

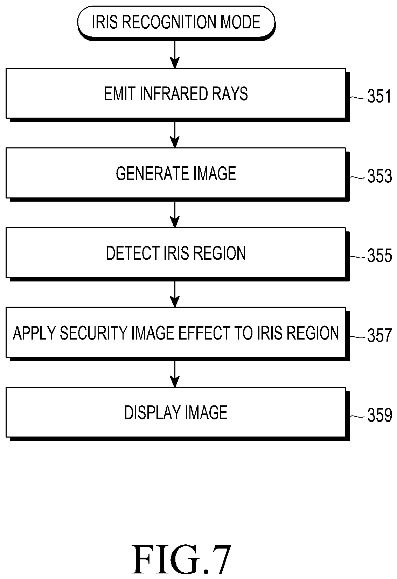

Referring to FIG. 7, a diagram illustrating an operation of providing the image, to which the image effect is applied, in the form of a preview according to an embodiment of the present disclosure, is shown.

When the iris recognition mode is set, the iris detection module 170 may make infrared rays of a specific wavelength be emitted through the IRED 184 by controlling the LED driver 185 in operation 351. Then, the iris detection module 170 may generate an image by driving the image sensor 183 and the image signal processor 172 in operation 353.

The user may position the electronic apparatus 100 at a position, which is spaced apart from the face by a specific distance so that the lens 181 of the electronic apparatus 100 may be positioned at a point at which the eye may be photographed.

The iris detection module 170 of the electronic apparatus 100 may control the image signal processor 172 to process the digital signal output by the image sensor 183 from a time at which the iris recognition mode is set, and provide the user with a preview.

The iris detection module 170 may detect an iris region from the generated image in operation 355. When the iris region is detected, the iris detection module 170 may generate the image, to which an image effect, such as a security image effect, is applied, by applying the image effect to the iris region in operation 357. The image effect may be image processing of distorting data of the iris region included in the image in order to prevent iris information from being exposed. For example, the image effect may include blur processing, mosaic processing, color and brightness change, and the like. Otherwise, the image effect may also be overlaying a separate image on the detected iris region.

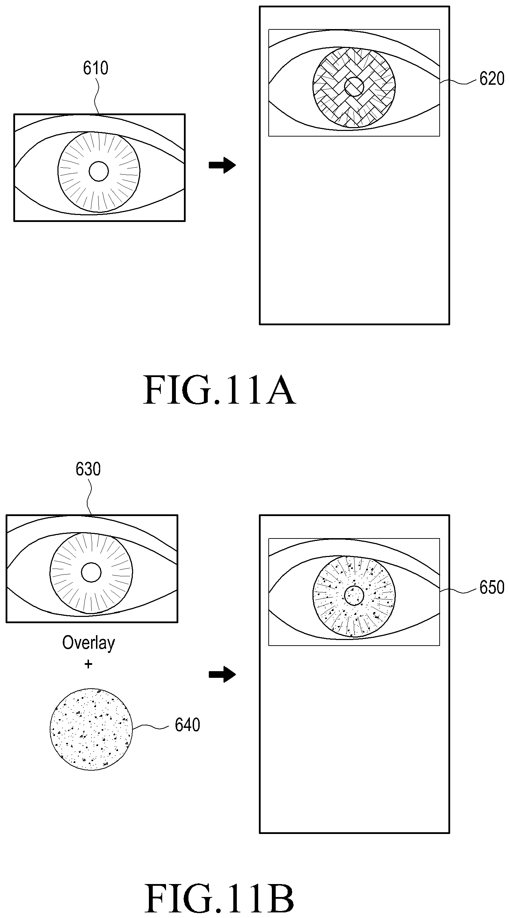

Further, the iris detection module 170 may provide the user with the preview by displaying the image including the iris region, to which the image effect is applied, on the display 150 in operation 359. Examples related to this are illustrated in FIGS. 11A and 11B.

FIGS. 11A, 11B, 11C, 12A, 12B, and 13 are diagrams illustrating an iris image, to which an image effect is applied, according to an embodiment of the present disclosure.

Referring to FIGS. 11A and 11B, one or more image effects are applied to the image including the iris information and the image is displayed on the display 150 in the form of a preview, thereby notifying the user that the iris image of the user is positioned within the view angle of the camera module 180 for the iris recognition.

FIG. 11A is a diagram illustrating an image obtained by applying a mosaic effect to the iris region. When a row image output from the image sensor 183 is converted into Joint Photographic Experts Group (JPEG) or YUV data through the image signal processor 172, a first image 610, as shown in FIG. 11A, may be generated. Then, the detector 171 may detect an iris region from the first image 610, apply the mosaic effect to the detected iris region, and generate a second image 620. The detector 171 makes the second image 620 to be displayed on the display 150. Accordingly, even though the preview is captured by using a screen capture function, and the like, it is possible to prevent the complete image of the iris from being exposed.

FIG. 11B illustrates an example in which the image effect is applied to the iris region by overlaying another image on the image including the iris. When the iris detection module 170 detects the iris region from an original image, such as a third image 630, the iris detection module 170 may generate a fake image 640 to be overlaid on the iris region. Further, the fake image 640 is overlaid on the iris region of the third image 630, so that a fourth image 650 may be generated. The iris detection module 170 displays the fourth image 650. The overlay may be repeated for each frame of the preview.

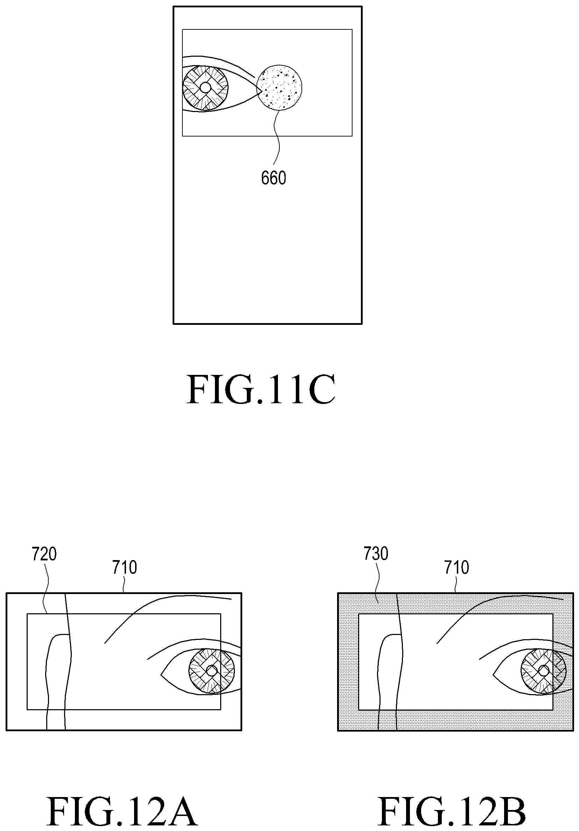

In the meantime, according to another embodiment, the iris detection module 170 may generate an image obtained by applying an appropriate image effect to the detected iris region, and display the generated image together with the guide information. The iris detection module 170 may detect the iris region from the image, and determine guide information corresponding to the iris region. Further, the iris detection module 170 may generate an image obtained by applying the image effect to the iris region. Then, the iris detection module 170 may display the image, to which the image effect is applied, and the guide information on the display 150. Examples related to this are illustrated in FIG. 11C.

Referring to FIG. 11C, the fake image 640 used during the overlaying in FIG. 11B is displayed at a reference point of the iris as the guide information, and a fifth image 660, to which the mosaic effect is applied, is displayed in the iris region.

In order to protect the iris information included in the image, the preview may be provided in a different method from that of the various embodiments discussed above.

FIGS. 12A and 12B illustrate an example of protecting iris information by displaying only at least a part of the image obtained from the image sensor 183, in addition to the application of the image effect to the iris region. For example, it is possible to prevent the iris information from being exposed by providing the preview having a smaller view angle than the view angle of the image sensor 183.

Referring to FIG. 12A, most of the iris is included in a sixth image 710 obtained from the image sensor 183. However, since a preview region 720 provided as the preview is smaller than the sixth image 710, only a part of the iris is shown to the user through the preview. Further, since most of the iris is included in the sixth image 710, the iris detection module 170 may detect the iris region from the sixth image 710, and thus prevent the iris information from being exposed from the preview by applying the image effect to the iris region.

FIG. 12B illustrates the case where the sixth image 710 obtained from the image sensor 183 is output as the preview while a view angle of the sixth image 710 is maintained, but the image effect is applied to a designated region 730 of a border of the sixth image 710. For example, a blur effect may be applied to the designated region 730 of the border, and the designated region 730 of the border may be displayed by an opaque specific color, for example, a black color. Even in this case, a part of the iris is shown to the user through the preview as illustrated in FIG. 12A. Further, since most of the iris is included in the sixth image 710, the iris detection module 170 may detect the iris region from the sixth image 710, and thus prevent the iris information from being exposed from the preview by applying the image effect to the iris region.

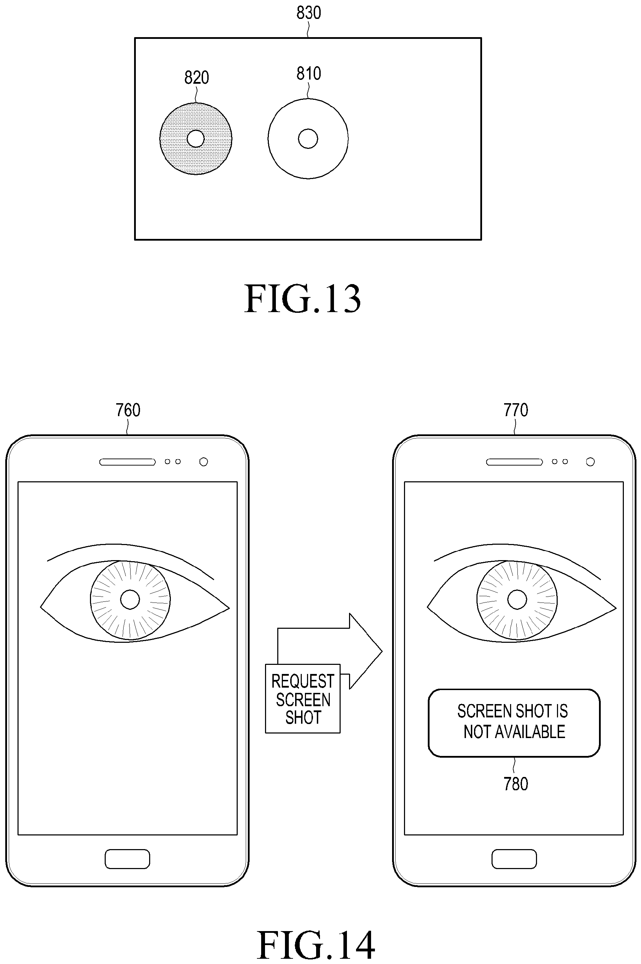

FIG. 13 illustrates an example of generating an image in which only a form of the detected iris region may be identified according to an embodiment of the present disclosure. For example, the iris detection module 170 may apply the image effect to the iris region so that only a form of the detected iris region may be identified. Further, the image effect may be applied so that the remaining other photographed objects, except for the iris region, are not present in the image. Otherwise, the iris region may be replaced with an image corresponding to the form of the iris region.

Referring to FIG. 13, the iris detection module 170 may generate and display a seventh image 830 including only an iris region 820, to which the image effect is applied, and guide information 810. In this case, the guide information 810 is information indicating the reference point of the iris. Accordingly, the user may confirm a current position of the iris and the reference point of the iris through the view, but the substantial iris information may be prevented from being exposed.

According to another embodiment, the iris information may be protected by inserting a watermark including reporting position information into an image including at least a part of the iris. The reporting position information may be information related to an object receiving the report about the use of the iris image for the iris recognition when the iris image is used for the iris recognition. For example, the reporting position information may also include at least one of identification information, address information, and a position of a server device managing identification information, a telephone number, an email address, an account information, and iris information about the user.

An operation process of the iris detection module 170 related to this is illustrated in FIGS. 8 and 9. FIG. 8 is a diagram illustrating a process of inserting a watermark including reporting position information into an image including at least a part of the iris. FIG. 9 is a diagram illustrating an operation process of the iris detection module 170 in the case where the image, into which the watermark is inserted, is used for the iris recognition.

Referring to FIG. 8, the iris detection module 170 may obtain an image including at least a part of the iris in operation 401. Further, the iris detection module 170 may insert an invisible watermark, including the reporting position information, into the obtained image in operation 403. For example, the iris detection module 170 may convert some pixels, from among pixels configuring the image, to include bit information indicating the reporting position information. Some pixels may be pixels configuring an image region including at least a part of the iris.

When the image generated by the process of FIG. 8 is used for the iris recognition, the iris detection module 170 may be operated like the operation of FIG. 9.

Referring to FIG. 9, the iris detection module 170 may attempt to recognize the iris by using the image including the iris information according to a request of the user in operation 451. When the iris recognition is attempted, the iris detection module 170 may detect the watermark included in the image in operation 453. Further, the iris detection module 170 may generate a reporting message reporting that the iris information is used, and transmit the generated reporting message, or in other words, an iris information use message, based on the reporting position information, such as the user identification information, included in the watermark in operation 455. According to another example, the reporting message may additionally include information about use time of the iris information.

For example, when the reporting position information included in the watermark is an email address, the reporting message may be transmitted to the email address.

In another example, when the reporting position information includes address information of a server device managing the iris information, and user identification information, the fact of the use of the iris information and the user identification information may be generated as the reporting message. The reporting message may be transmitted to the server device. When the reporting message is received, the server device may notify a corresponding user of the fact of the use of the iris information by using the user identification information included in the reporting message.

According to the aforementioned process, use details of the iris information may be transmitted to the user, and thus when the iris information is unlawfully used, the user may recognize the unlawful use of the iris information.

In the meantime, when it is confirmed that at least a part of the iris is included in the image displayed on the display 150, the iris detection module 170 may prohibit execution of a screen shot function. An embodiment related to this is illustrated in FIG. 14.

Referring to FIG. 14, when an image including an eye is displayed like a first screen image 760, the iris detection module 170 may detect an iris region from the image. When the iris region is detected from the currently displayed image, the iris detection module 170 may prohibit execution of a screen shot, or in other words, a screen capture, function. Then, when the execution of the screen shot function is requested from the user, the iris detection module 170 may display a prohibition message 780 notifying the user that the screen shot function is prohibited as in a second screen image 770.

Otherwise, even in cases where an application related to the iris recognition is executed, the iris detection module 170 may prohibit the execution of the screen shot function to prevent the iris information from being exposed.

According to various embodiments, the method may include an operation of obtaining the image including at least a part of the iris, an operation of applying the image effect to the image region corresponding to at least a part of the iris, and an operation of displaying the image region through the display functionally connected with the electronic apparatus.

According to various embodiments, the operation of applying the image effect to the image region may include an operation of applying at least one image effect processing from among blur processing, mosaic processing, and color and brightness change to the image region.

According to various embodiments, the operation of applying the image effect to the image region may include an operation of overlaying at least one another image on the image region.

According to various embodiments, the operation of applying the image effect to the image region may include an operation of replacing the image region with an image corresponding to a form of the image region.

According to various embodiments, the operation of displaying the image region may include an operation of displaying only at least a part of the image including the image region.

According to various embodiments, the operation of displaying the image region may include an operation of applying the image effect to a designated region of a border of the image and displaying the image.

According to various embodiments, the operation of displaying the image region may include inducing a position of the image region to a designated position.

According to various embodiments, the operation of displaying the image region may include inserting a watermark into at least a part of the image.

According to various embodiments, the operation of inserting the watermark may include an operation of inserting the watermark including at least one of user identification information, device information, a telephone number, time information, server information, and position information to be inserted.

According to various embodiments, the method may include an operation of attempting iris recognition by using the image, and an operation of detecting the watermark from the image, and an operation of transmitting a message notifying use of the image to at least one external electronic device based on the detected watermark.

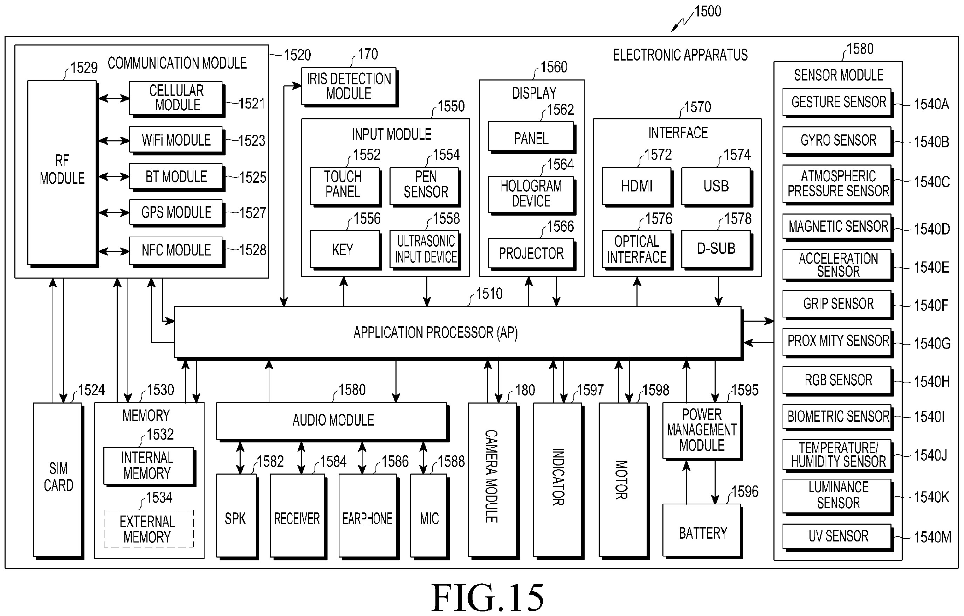

FIG. 15 is a diagram illustrating a configuration of an electronic apparatus according to an embodiment of the present disclosure.

Referring to FIG. 15, an electronic apparatus 1500 may configure the entire or a part of the electronic apparatus 100 illustrated in FIG. 1. As shown in FIG. 15, the electronic apparatus 1500 may include one or more of an Application Processor (AP) 1510, a communication module 1520, a Subscriber Identification Module (SIM) card 1524, a memory 1530, a sensor module 1580, an input module 1550, a display 1560, an interface 1570, an audio module 1580, the camera module 180, a power management module 1595, a battery 1596, an indicator 1597, a motor 1598, and the iris detection module 170.

The AP 1510 may control a plurality of hardware or software elements connected to the AP 1510 by driving an operating system or an application program, and perform processing and calculation on various data including multimedia data. The AP 1510 may be implemented as, for example, a System on Chip (SoC). According to an embodiment, the AP 1510 may further include a Graphic Processing Unit (GPU) (not shown).

The communication module 1520, which may be similar to the communication interface 160 shown in FIG. 1, may perform data transception in communication between the electronic apparatus 1500and other electronic devices, for example, the electronic device 104 or the server 106 (see FIG. 1) connected through the network. According to one embodiment, the communication module 1520 may include a cellular module 1521, a WiFi module 1523, a BT module 1525, a GPS module 1527, an NFC module 1528, and a Radio Frequency (RF) module 1529.

The cellular module 1521 may provide voice call, video call, a text service, or the Internet service through a communication network, for example, LTE, LTE-A, CDMA, WCDMA, UMTs, WiBro, or GSM. Further, the cellular module 1521 may perform discrimination and authentication of the electronic device within the communication network by using a subscriber identification module, for example, the SIM card 1524. According to an embodiment, the cellular module 1521 may perform at least some functions among functions providable by the AP 1510. For example, the cellular module 1521 may perform at least a part of a multimedia control function.

According to an embodiment, the cellular module 1521 may include a Communication Processor (CP) (not shown). Further, the cellular module 1521 may be implemented, for example, as an SoC.

Referring to FIG. 15, it is illustrated that the elements, such as the cellular module 1521, the memory 1530, and the power management module 1595, are separated from the AP 1510, but according to an embodiment, the AP 1510 may be implemented so as to include at least some of the aforementioned elements, for example, the cellular module 1521.

According to embodiment, the AP 1510 or the cellular module 1521 may load a command or data received from a nonvolatile memory connected to the AP 1510 or the cellular module 1521, or at least one of other elements in a volatile memory and process the command or the data. Further, the AP 1510 or the cellular module 1521 may store data received from at least one of other elements or generated by at least one of other elements in the nonvolatile memory.

Each of the WiFi module 1523, the BT module 1525, the GPS module 1527, and the NFC module 1528 may include, for example, a processor for processing data transceived through a corresponding module.

Referring to FIG. 15, it is illustrated that the cellular module 1521, the WiFi module 1523, the BT module 1525, the GPS module 1527, and the NFC module 1528 are separate modules, but according to an embodiment, at least a part of the cellular module 1521, the WiFi module 1523, the BT module 1525, the GPS module 1527, and the NFC module 1528 may be included in one Integrated Chip (IC) or IC package. For example, at least a part of the processors corresponding to the cellular module 1521, the WiFi module 1523, the BT module 1525, the GPS module 1527, and the NFC module 1528 may be implemented as one SoC.

The RF module 1529 may transceive data, for example, an RF signal. The RF module 1529 may include, for example, a transceiver, a Power Amp Module (PAM), a frequency filter, a Low Noise Amplifier (LNA), or the like, which is not illustrated in FIG. 15. Further, the RF module 1529 may further include a component, such as a conductor or a conductive line, for transceiving electromagnetic waves in a free space in wireless communication. Referring to FIG. 15, it is illustrated that the cellular module 1521, the WiFi module 1523, the BT module 1525, the GPS module 1527, and the NFC module 1528 share the RF module 1529 with each other, but according to an embodiment, at least one of the cellular module 1521, the WiFi module 1523, the BT module 1525, the GPS module 1527, and the NFC module 1528 may transceive the RF signal through a separate RF module.

The SIM card 1524 may be a card including a SIM, and may be inserted into a slot formed at a specific position of the electronic apparatus. The SIM card 1524 may include unique identification information, for example, an Integrated Circuit Card Identifier (ICCID), or subscriber information, for example, International Mobile Subscriber Identity (IMSI).

The memory 1530 may include an internal memory 1532 and/or an external memory 1534. The internal memory 1532 may include at least one of a volatile memory, for example, a Dynamic Random Access Memory (DRAM), a Static RAM (SRAM), and a Synchronous Dynamic RAM (SDRAM), and/or a non-volatile memory, for example, a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, and a NOR flash memory.

According to an embodiment, the internal memory 1532 may be a Solid State Drive (SSD). The external memory 1534 may further include a flash drive, for example, a Compact Flash (CF), a Secure Digital (SD), a Micro Secure Digital (Micro-SD), a Mini Secure Digital (Mini-SD), an extreme Digital (xD), or a memory stick. The external memory 1534 may be functionally connected with the electronic apparatus 1500 through various interfaces. According to an embodiment, the electronic apparatus 1500 may further include a storage device, such as a hard drive.

The sensor module 1540 may measure a physical quantity or detect an operation state of the electronic apparatus 1500, and convert the measured or detected information into an electrical signal. The sensor module 1540 may include at least one of, for example, a gesture sensor 1540A, a gyro sensor 1540B, an atmospheric pressure sensor 1540C, a magnetic sensor 1540D, an acceleration sensor 1540E, a grip sensor 1540F, a proximity sensor 1540G, a Red, Green, Blue (RGB) sensor 1540H, a biometric sensor 15401, a temperature/humidity sensor 1540J, an luminance sensor 1540K, and an Ultra Violet (UV) sensor 1540M. In addition or in general, the sensor module 1540 may include, for example, an E-nose sensor (not shown), an ElectroMyoGraphy (EMG) sensor (not shown), an ElectroEncephaloGram (EEG) sensor (not shown), an ElectroCardioGram (ECG) sensor (not shown), an Infra Red (IR) sensor (not shown), an iris sensor (not shown), or a fingerprint sensor (not shown). The sensor module 1540 may further include a control circuit for controlling one or more sensors included therein.

The input device 1550 may include a touch panel 1552, a pen sensor 1554, a key 1556, and an ultrasonic input device 1558. The touch panel 1552 may recognize a touch input by at least one type of, for example, a capacitive type, a resistive type, an infrared ray type, and an ultrasonic wave type. Further, the touch panel 1552 may also further include a control circuit (not shown). In the case of the capacitive type, a physical contact or proximity may be recognized. The touch panel 1552 may further include a tactile layer. In this case, the touch panel 1552 may provide the user with a tactile response.

The pen sensor 1554 may be implemented by using, for example, a method identical or similar to a method of receiving a touch input of a user, or a separate recognition sheet. The key 1556 may include, for example, a physical button, an optical key, or a keypad. The ultrasonic input device 1558 is a device capable of detecting sound waves through a microphone 1588 and confirming data in the electronic apparatus 1500 through an input tool generating an ultrasonic wave signal, and is capable of performing wireless recognition. According to an embodiment, the electronic apparatus 1500 may also receive a user input from an external device connected with the communication module 1520 by using the communication module 1520.

The display 1560 may include a panel 1562, a hologram device 1564, and a projector 1566. The panel 1562 may be implemented to be, for example, flexible, transparent, or wearable. The panel 1562 may be formed in one module with the touch panel 1552. The hologram device 1564 may show a 3-Dimensional (3D) image in the air by using light interference. The projector 1566 may display an image by projecting light to a screen. The screen may be positioned, for example, at an internal side or an external side of the electronic apparatus 1500. According to an embodiment, the display 1560 may further include a control circuit for controlling the panel 1562, the hologram device 1564, and the projector 1566.

The interface 1570 may include, for example, a High Definition Multimedia Interface (HDMI) 1572, a Universal Serial Bus (USB) 1574, an optical interface 1576, and a D-subminiature (D-sub) 1578. The interface 1570 may be included in, for example, the communication module 160 illustrated in FIG. 1. In addition or in general, the interface 1570 may include, for example, a Mobile High-definition Link (MHL), an SD card/Multi-Media Card (MMC) interface, or Infrared Data Association (IrDA) standard interface.

The audio module 1580 may bilaterally convert a sound and an electrical signal. At least a part of elements of the audio module 1580 may be included in, for example, the input/output interface 140 illustrated in FIG. 1. The audio module 1580 may process voice information input or output through, for example, a speaker (SPK) 1582, a receiver 1584, an earphone 1586, and the microphone 1588.

The camera module 180 is a device capable of photographing a still image and a video, and according to an embodiment, the camera module 180 may include one or more image sensors, for example, a front sensor or a rear sensor, a lens (not shown), an Image Signal Processor (not shown), and a flash (not shown), for example, an LED or a xenon lamp.

The power management module 1595 may manage power of the electronic apparatus 1500. Although it is not illustrated, the power management module 1595 may include, for example, a Power Management Integrated Circuit (PMIC), a charger Integrated Circuit (IC), and a battery fuel gauge.

The PMIC may be mounted in, for example, an IC or an SoC semiconductor. Charging methods may be classified into a wired charging method and a wireless charging method. The charger IC may charge a battery and prevent inflow of an over-voltage or an over-current from a charger. According to an embodiment, the charger IC may include a charger IC for at least one of the wired charging method and the wireless charging method. Examples of the wireless charging method include a magnetic resonance scheme, a magnetic induction scheme, and an electromagnetic scheme, and an additional circuit for wireless charging, such as a coil loop circuit, a resonance circuit, a rectifier circuit, and the like may be added.

The battery gauge may measure, for example, a residual quantity, a voltage, a current, and a temperature during charging of the battery 1596. The battery 1596 may store or generate electricity, and may supply power to the electronic apparatus 1500 by using the stored or generated electricity. The battery 1596 may include, for example, a rechargeable battery or a solar battery.

The indicator 1597 may display a specific state, for example, a booting state, a message state, or a charging state, of the electronic apparatus 1500 or a part of the electronic apparatus 1500, for example, the AP 1510. The motor 1598 may convert an electrical signal into a mechanical vibration. Although it is not illustrated, the electronic apparatus 1500 may include a processing unit, for example, a Graphic Processing Unit (GPU). A processing unit for mobile TV support may be included in the electronic apparatus 1500, and may process media data according to a standard of Digital Multimedia Broadcasting (DMB), Digital Video Broadcasting (DVB), media flow, or the like.

Each of the aforementioned elements of the electronic apparatus may be formed of one or more components, and a name of a corresponding element may be changed according to the kind of the electronic apparatus 100. The electronic apparatus 100 according to the present disclosure may include one or more of the aforementioned elements or may further include other additional elements, or some of the aforementioned elements may be omitted. Further, some of the elements of the electronic apparatus 100 according to the present disclosure may be combined into one entity, which may perform the same functions as those of the elements before the combination.

The term "module" used in the present disclosure may refer to, for example, a unit including one or a combination of two or more of hardware, software, and firmware. The "module" may be mechanically or electronically implemented.

According to various embodiments, at least a part of the devices, for example, the modules or the functions of the modules, or the methods, for example, the operations, according to the present disclosure may be implemented, for example, by a command stored in the computer readable storage media in the form of a programming module. When the command is executed by one or more processors, for example, the processor 210, the one or more processors may perform a function corresponding to the command. The computer-readable storage medium may be, for example, the memory 220. At least a part of the programming module may be implemented, for example, executed, by, for example, the processor 210. At least a part of the programming module may include, for example, a module, a program, a routine, a set of instructions, or a process for performing one or more functions.

The computer readable recording medium may include a magnetic media, such as a hard disk, a floppy disk, and a magnetic tape, an optical media, such as a Compact Disc Read Only Memory (CD-ROM) and a Digital Versatile Disk (DVD), a magneto-optical media, such as a floptical disk, and a hardware device specially configured so as to store and perform a program instruction, for example, a programming module, such as a ROM, a RAM, and a flash memory. In addition, the program instructions may include high class language codes, which may be executed in a computer by using an interpreter, and the like, as well as machine codes made by a compiler. The aforementioned hardware device may be configured to be operated as one or more software modules in order to perform the operation of the present disclosure, and vice versa.

The module or the programming module according to the present disclosure may include one or more of the aforementioned elements or may further include other additional elements, or some of the aforementioned elements may be omitted. The operations performed by the module, the programming module, or other elements according to the present disclosure may be executed by a serial, parallel, repeated, or heuristic method. Further, some operations may be executed in a different order or omitted, or another operation may be added.

Although a few preferred embodiments have been shown and described, it will be appreciated by those skilled in the art that various changes and modifications might be made without departing from the scope of the invention, as defined in the appended claims.

## Claims

1. A method of displaying biometric information, comprising:
obtaining (201) a first image including at least a part of biometric information;
applying (203) an image effect to an image region corresponding to at least a part of the biometric information; and
displaying (205) the image region through a display connected to an electronic apparatus; wherein
the applying (203) of the image effect includes inserting a watermark (403) including a reporting position information to at least a part of the first image;
wherein the reporting position information indicates where a reporting message, for reporting that the biometric information is used, is transmitted; and
the method further comprising attempting biometric information recognition by using the first image;
detecting the watermark from the first image; and
transmitting the reporting message to at least one external electronic device based on the reporting position information in the detected watermark.

2. The method of claim 1, wherein the applying (203) of the image effect includes applying at least one image effect processing from among blur processing, mosaic processing, and color and brightness change to the image region.

3. The method of claim 1 or claim 2, wherein the applying (203) of the image effect includes overlaying at least a second image to the image region.

4. The method of any preceding claim, wherein the applying (203) of the image effect includes replacing the image region with an image corresponding to a form of the image region.

5. The method of any preceding claim, wherein the displaying (205) of the image region includes displaying only at least a part of the first image including at least the image region.

6. The method of any preceding claim , wherein the displaying (205) of the image region includes applying at least one image effect to a designated region of a border of the first image, and displaying the image region.

7. The method of any preceding claim, wherein the displaying (205) of the image region includes displaying information indicating a designated position corresponding to a position of the image region.

8. An electronic apparatus (100), comprising:
a display (150) configured to display information;
a control module (170) connected to the display (150), and configured to obtain an image including at least a part of biometric information, to apply an image effect to an image region corresponding to at least a part of the biometric information, and to control the display (150) to display the image region,
wherein the control module is configured to insert a watermark (403) including a reporting position information to at least a part of the first image;
wherein the reporting position information indicates where a reporting message, for reporting that the biometric information is used, is transmitted; and
attempt biometric information recognition by using the first image;
detect the watermark from the first image; and
transmit the reporting message notifying at least one external electronic device based on reporting position information in the detected watermark.

9. The electronic apparatus (100) of claim 8, further comprising:
an infrared emitting diode (184) configured to emit infrared rays; and
an image sensor (183) configured to obtain the image, the image sensor (183) being functionally connected to the infrared emitting diode (184).

10. The electronic apparatus (100) of claim 8 or claim 9, wherein the control module (170) is further configured to apply at least one image effect processing from among blur processing, mosaic processing, and color and brightness change to the image region.

11. The electronic apparatus (100) of any one of claims 8 to 10, wherein the control module (170) is further configured to overlay at least one other image to the image region, and to display the image region.

12. The electronic apparatus (100) of any one of claims 8 to 11, wherein the control module (170) is further configured to replace the image region with a replacement image corresponding to a form of the image region, and to display the image region.

13. The electronic apparatus (100) of any one of claims 8 to 12, wherein the control module (170) is further configured to display only at least a part of the image including at least the image region.

14. The electronic apparatus (100) of any one of claims 8 to 13, wherein the control module (170) is further configured to apply at least one image effect to a designated region of a border of the image, and to display the image region.

15. The electronic apparatus (100) of any one of claims 8 to 14, wherein the control module is further configured to display information including a position of the image region corresponding to a designated position.

## Patentansprüche

1. Verfahren zum Anzeigen biometrischer Informationen, umfassend:
Erhalten (201) eines ersten Bildes, das mindestens einen Teil der biometrischen Informationen einschließt;
Anwenden (203) eines Bildeffekts auf eine Bildregion, die mindestens einem Teil der biometrischen Informationen entspricht; und
Anzeigen (205) der Bildregion durch ein Display, welches mit einem elektronischen Apparat verbunden ist;
wobei
das Anwenden (203) des Bildeffekts Einfügen eines Wasserzeichens (403), das Meldepositionsinformationen einschließt, in mindestens einen Teil des ersten Bildes einschließt;
wobei die Meldepositionsinformationen angeben, wo eine Meldenachricht, um zu melden, dass die biometrischen Informationen verwendet werden, gesendet wird; und
das Verfahren ferner umfasst:
Versuchen der biometrischen Informationserkennung unter Verwendung des ersten Bildes;
Detektieren des Wasserzeichens aus dem ersten Bild; und
Senden der Meldenachricht an mindestens eine externe elektronische Vorrichtung basierend auf den Meldepositionsinformationen in dem detektierten Wasserzeichen.

2. Verfahren nach Anspruch 1, wobei das Anwenden (203) des Bildeffekts Anwenden von mindestens einer Bildeffektverarbeitung aus Unschärfeverarbeitung, Mosaikverarbeitung sowie Farb- und Helligkeitsänderung an der Bildregion einschließt.

3. Verfahren nach Anspruch 1 oder Anspruch 2, wobei das Anwenden (203) des Bildeffekts Überlagern der Bildregion mit mindestens einem zweiten Bild einschließt.

4. Verfahren nach einem der vorhergehenden Ansprüche, wobei das Anwenden (203) des Bildeffekts Ersetzen der Bildregion durch ein Bild einschließt, welches einer Form der Bildregion entspricht.

5. Verfahren nach einem der vorhergehenden Ansprüche, wobei das Anzeigen (205) der Bildregion Anzeigen von nur mindestens einem Teil des ersten Bildes einschließt, welcher mindestens die Bildregion einschließt.

6. Verfahren nach einem der vorhergehenden Ansprüche, wobei das Anzeigen (205) der Bildregion Anwenden von mindestens einem Bildeffekt auf eine bezeichnete Region einer Grenze des ersten Bildes und Anzeigen der Bildregion einschließt.

7. Verfahren nach einem der vorhergehenden Ansprüche, wobei das Anzeigen (205) der Bildregion Anzeigen von Informationen einschließt, die eine bezeichnete Position angeben, die einer Position der Bildregion entspricht.

8. Elektronischer Apparat (100), umfassend:
ein Display (150), welches zum Anzeigen von Informationen konfiguriert ist;
ein Steuermodul (170), das mit dem Display (150) verbunden ist und konfiguriert ist, um ein Bild zu erhalten, welches mindestens einen Teil von biometrischen Informationen einschließt, einen Bildeffekt auf eine Bildregion anzuwenden, die mindestens einem Teil der biometrischen Informationen entspricht, und das Display (150) zu steuern, um die Bildregion anzuzeigen, wobei das Steuermodul konfiguriert ist, um ein Wasserzeichen (403), das Meldepositionsinformationen einschließt, in mindestens einen Teil des ersten Bildes einzuschließen;
wobei die Meldepositionsinformationen angeben, wo eine Meldenachricht, um zu melden, dass die biometrischen Informationen verwendet werden, gesendet wird; und
biometrische Informationserkennung unter Verwendung des ersten Bildes zu versuchen;
das Wasserzeichen aus dem ersten Bild zu detektieren; und
die Meldenachricht zu senden, die mindestens eine externe elektronische Vorrichtung basierend auf den Meldepositionsinformationen in dem detektierten Wasserzeichen benachrichtigt.

9. Elektronischer Apparat (100) nach Anspruch 8, ferner umfassend:
eine Infrarot emittierende Diode (184), die zum Emittieren von Infrarotstrahlen konfiguriert ist; und
einen Bildsensor (183), der konfiguriert ist, um das Bild zu erhalten, wobei der Bildsensor (183) funktional mit der Infrarot emittierenden Diode (184) verbunden ist.

10. Elektronische Vorrichtung (100) nach Anspruch 8 oder Anspruch 9, wobei das Steuermodul (170) ferner konfiguriert ist, um mindestens eine Bildeffektverarbeitung aus Unschärfeverarbeitung, Mosaikverarbeitung sowie Farb- und Helligkeitsänderung auf die Bildregion anzuwenden.

11. Elektronischer Apparat (100) nach einem der Ansprüche 8 bis 10, wobei das Steuermodul (170) ferner konfiguriert ist, um die Bildregion mit mindestens einem anderen Bild zu überlagern und die Bildregion anzuzeigen.

12. Elektronischer Apparat (100) nach einem der Ansprüche 8 bis 11, wobei das Steuermodul (170) ferner konfiguriert ist, um die Bildregion durch ein Ersatzbild zu ersetzen, welches einer Form der Bildregion entspricht, und die Bildregion anzuzeigen.

13. Elektronischer Apparat (100) nach einem der Ansprüche 8 bis 12, wobei das Steuermodul (170) ferner konfiguriert ist, um nur mindestens einen Teil des Bildes anzuzeigen, der mindestens die Bildregion einschließt.

14. Elektronischer Apparat (100) nach einem der Ansprüche 8 bis 13, wobei das Steuermodul (170) ferner konfiguriert ist, um mindestens einen Bildeffekt auf eine bezeichnete Region einer Grenze des Bildes anzuwenden und die Bildregion anzuzeigen.

15. Elektronischer Apparat (100) nach einem der Ansprüche 8 bis 14, wobei das Steuermodul ferner konfiguriert ist, um Informationen anzuzeigen, die eine Position der Bildregion einschließen, die einer bezeichneten Position entspricht.

## Revendications

1. Procédé d'affichage d'informations biométriques comprenant :
l'obtention (201) d'une première image comprenant au moins une partie des informations biométriques ;
l'application (203) d'un effet d'image à une zone de l'image correspondant à au moins une partie de l'information biométrique ; et
l'affichage (205) de la zone d'image à travers un dispositif d'affichage connecté à un appareil électronique ;
dans lequel
l'application (203) de l'effet d'image comprend l'insertion d'un filigrane (403) comprenant un signalement d'une information de position à au moins une partie de la première image ;
dans lequel le signalement de l'information de position indique où est transmis un message de compte-rendu, pour signaler que les informations biométriques sont utilisées ; et
le procédé comprenant en outre la tentative de reconnaissance d'informations biométriques en utilisant la première image ;
la détection du filigrane de la première image ; et
la transmission du message de signalement à au moins un dispositif électronique externe sur la base du signalement des informations de position dans le filigrane détecté.

2. Procédé selon la revendication 1, dans lequel l'application (203) de l'effet d'image comprend l'application d'au moins un traitement d'effet d'image parmi un traitement de flou, un traitement de mosaïque et un changement de couleur et de luminosité dans la zone de l'image.

3. Procédé selon la revendication 1 ou la revendication 2, dans lequel l'application (203) de l'effet d'image comprend la superposition d'au moins une seconde image à la zone de l'image.

4. Procédé selon l'une quelconque des revendications précédentes, dans lequel l'application (203) de l'effet d'image comprend le remplacement de la zone de l'image par une image correspondant à une forme de la zone de l'image.

5. Procédé selon l'une quelconque des revendications précédentes, dans lequel l'affichage (205) de la zone de l'image comprend l'affichage d'au moins une partie de la première image comprenant au moins la zone de l'image.

6. Procédé selon l'une quelconque des revendications précédentes, dans lequel l'affichage (205) de la zone de l'image comprend l'application d'au moins un effet d'image sur une zone désignée d'une bordure de la première image, et l'affichage de la zone de l'image.

7. Procédé selon l'une quelconque des revendications précédentes, dans lequel l'affichage (205) de la zone de l'image comprend l'affichage d'informations indiquant une position désignée correspondant à une position de la zone de l'image.

8. Appareil électronique (100) comprenant : un dispositif d'affichage (150) configuré pour afficher des informations ;
un module de commande (170) connecté au dispositif d'affichage (150) et configuré pour obtenir une image comprenant au moins une partie des informations biométriques, pour appliquer un effet d'image à une zone de l'image correspondant à au moins une partie des informations biométriques, et pour commander le dispositif d'affichage (150) afin qu'il affiche la zone de l'image,
dans lequel
le module de commande est configuré pour insérer un filigrane (403) comprenant un signalement de l'information de position sur au moins une partie de la première image ;
dans lequel le signalement de l'information de position indique où est transmis un message de compte-rendu, pour signaler que les informations biométriques sont utilisées ; et
tenter de reconnaître des informations biométriques en utilisant la première image ;
détecter le filigrane de la première image ; et transmettre le message de signalement à au moins un dispositif électronique externe sur la base du signalement des informations de position dans le filigrane détecté.

9. Appareil électronique (100) selon la revendication 8, comprenant en outre :
une diode émettrice d'infrarouges (184) configurée pour émettre des rayons infrarouges ; et
un capteur d'image (183) configuré pour obtenir l'image, le capteur d'image (183) étant connecté de manière fonctionnelle à la diode émettrice d'infrarouges (184).

10. Appareil électronique (100) selon la revendication 8 ou la revendication 9, dans lequel le module de commande (170) est en outre configuré pour appliquer au moins un traitement d'effet d'image parmi un traitement de flou, un traitement de mosaïque et un changement de couleur et de luminosité à la zone de l'image.

11. Appareil électronique (100) selon l'une quelconque des revendications 8 à 10, dans lequel le module de commande (170) est en outre configuré pour superposer au moins une autre image à la zone de l'image et pour afficher la zone de l'image.

12. Appareil électronique (100) selon l'une quelconque des revendications 8 à 11, dans lequel le module de commande (170) est en outre configuré pour remplacer la zone de l'image par une image de remplacement correspondant à une forme de la zone de l'image et pour afficher la zone de l'image.

13. Appareil électronique (100) selon l'une quelconque des revendications 8 à 12, dans lequel le module de commande (170) est en outre configuré pour afficher uniquement au moins une partie de l'image comprenant au moins la zone de l'image.

14. Appareil électronique (100) selon l'une quelconque des revendications 8 à 13, dans lequel le module de commande (170) est en outre configuré pour appliquer au moins un effet d'image à une zone désignée d'une bordure de l'image et pour afficher la zone de l'image.

15. Appareil électronique (100) selon l'une quelconque des revendications 8 à 14, dans lequel le module de commande est en outre configuré pour afficher des informations comprenant une position de la zone de l'image correspondant à une position désignée.
